# EUROPEAN PATENT SPECIFICATION

(11) **EP 3 246 145 B1**
(45) Date of publication and mention of the grant of the patent: **21.08.2019**
(21) Application number: 17169925.9
(22) Date of filing: 08.05.2017
(51) Int. Cl.: B29C 45/14, B29K 77/00

(54) **MANUFACTURING METHOD FOR GEARS**
HERSTELLUNGSVERFAHREN FÜR ZAHNRÄDER
PROCÉDÉ DE FABRICATION D'ENGRENAGE

(30) Priority: 17.05.2016 JP 2016099034
(43) Date of publication of application: 22.11.2017
(73) Proprietor: JTEKT CORPORATION, Osaka-shi, Osaka 542-8502 (JP)
(72) Inventor: KUNISHIMA, Takeshi, Osaka-shi Osaka 542-8502 (JP); KAMIKAWA, Tsuyoshi, Osaka-shi Osaka 542-8502 (JP); NAGAI, Yoshitomo, Osaka-shi Osaka 542-8502 (JP)
(74) Representative: Winter, Brandl, Fürniss, Hübner, Röss, Kaiser, Polte - Partnerschaft mbB

(56) References cited:
- EP-A1- 1 505 135
- EP-A2- 1 808 468
- WO-A1-2015/064689
- WO-A2-2013/104397
- JP-A- 2005 240 940
- JP-A- 2007 015 604
- JP-A- 2014 111 435
- US-A1- 2006 175 123
- US-A1- 2012 070 670

## Description

### BACKGROUND OF THE INVENTION

### 1. Field of the Invention

The invention relates to a manufacturing method for a gear.

### 2. Description of the Related Art

For example, in an electric power steering system, rotation from an electric motor for steering assist is decelerated by a reduction gear and output is amplified when transmitted to a steering operation mechanism. This provides torque assistance to operation of the steering operation mechanism resulting from a driver's operation. The reduction gear used typically includes a worm shaft and a worm wheel that are engaged with each other.

The worm wheel may be, for example, a gear in which at least teeth are formed by molding resin in order to reduce possible rattling sound (tooth hammering sound) during steering. For such a gear, for example, injection molding (insert molding) of a thermoplastic resin or the like is performed to integrally form an annular resin member over an outer periphery of an annular sleeve formed of metal. Subsequently, teeth are formed on an outer peripheral surface of the resin member by machining or the like.

Examples of the thermoplastic resin to be formed into the resin member include polyamide (PA6, PA66, PA46, and the like) and aromatic polyamide, polyacetal, PEEK, and PPS. In particular, polyamide such as PA66 is generally used. On an outer peripheral surface of a sleeve, recesses and protrusions are formed, for example, by involute splining or knurling. Then, shrinkage of the injection-molded resin member, that is, clinging of the resin member, is utilized to fix the resin material and the outer peripheral surface of the sleeve together to prevent the resin member from slipping out or rotating.

A suitable thermoplastic resin has as high a molecular weight as possible in order to provide a gear with an appropriate durability life. However, the thermoplastic resin with a high molecular weight has a high melt viscosity and it is thus likely that phenomenon that is called entrained voids occurs during injection molding; the thermoplastic resin curing before appropriately conforming to the recesses and protrusions on the outer peripheral surface of the sleeve.

Thus, in order to suppress the occurrence of possible voids, the sleeve may be heated before being used for insert molding, to delay solidification of the thermoplastic resin. In recent years, there has been a demand for a further reduction in the weights of automotive components based on a demand for a reduction in environmental loads. Also for electric power steering systems, the need for a reduction in weight and size has been increasing. There are also trends to increase outputs of the electric motors in order to allow electric power steering systems to be mounted in larger automobiles.

However, particularly when the resin member of the gear is formed of polyamide or the like that is not reinforced with fibers, the durability life of the gear may be insufficient in connection with the reduced weights and sizes or the increased output of the electric motor. Thus, the resin member may be damaged in a relatively short time. For example, when a radial force is applied to the resin member as a result of a surface pressure generated at the time of actuation of the reduction gear, the resin member may be displaced upward from the sleeve, leading to inappropriate meshing with the worm shaft formed of metal or the like. Then, teeth may be broken at bottom lands thereof.

Thus, Japanese Patent Application Publication No. 2007-15604 (JP 2007-15604 A) proposes the use of the following method in order to prevent the upward displacement and enhance the adhesion strength of a resin member with respect to the sleeve. For example, the outer peripheral surface of the sleeve is treated with a coupling agent or an adhesive that is a thermosetting resin or a thermoplastic resin with a high heat resistance is applied to the outer peripheral surface before the resin member is insert-molded.

However, when the sleeve is preheated in order to suppress the occurrence of possible voids, the adhesive strength fails to be enhanced because the coupling agent has a low molecular weight and is decomposed and inactivated during preheating. An adhesive, for example, made of a thermosetting resin such as polyimide or an epoxy resin undergoes a thermosetting reaction and loses adhesiveness during the preheating. This also precludes the adhesive strength from being enhanced.

Even in, for example, an adhesive made of a thermoplastic resin having a higher heat resistance and a higher melting point than the thermoplastic resin formed into the resin member such as polyetherimide or polyamidimide, adhesiveness fails to be exhibited with preheat sufficient to suppress possible voids or heat applied when the resin member is formed by injection-molding a thermoplastic resin. This also precludes the adhesive strength from being enhanced. An adhesive made of a thermoplastic resin with a high heat resistance can be allowed to exhibit adhesiveness by being heated at high temperature after the resin member is formed by molding (post-curing).

However, the resin member may be deformed by heat during post-curing, and higher energy is needed for manufacturing, preventing the demand for a reduction in environmental loads from being satisfied.
EP 1 808 468 A2 discloses bonding a metal to a polymer by a copolyamide-based hotmelt adhesive, thereby obtaining a hybrid component comprising said metal and said polymer. The process comprises coating the metal fully or partially with the adhesive melt, preferably of the VESTAMELT-type, using an electrostatic spray pistol by a suitable lacquer system and heating at 150°C for 150 seconds.

### SUMMARY OF THE INVENTION

An object of the invention is to provide a manufacturing method that enhances an adhesive strength between a sleeve and a resin member without the occurrence of voids and without the need for post-curing to enable manufacturing of a gear that prevents the resin member from being displaced upward. The object is achieved by a method having the features of claim 1. Advantageous further developments are subject-matter of the dependent claims.

The foregoing and further features and advantages of the invention will become apparent from the following description of example embodiments with reference to the accompanying drawings, wherein like numerals are used to represent like elements and wherein:
FIG. 1A and FIG. 1B are perspective views illustrating steps of an example of a manufacturing method for a gear in the invention;
FIG. 2A is a perspective view illustrating a step continued from the steps in FIG. 1A and FIG. 1B, and FIG. 2B is a perspective view depicting an example of a gear manufactured via the above-mentioned steps;
FIG. 3 is a graph illustrating an axial pull-out load ratio for gears manufactured in examples of the invention and in comparative examples;
FIG. 4 is a graph illustrating a radial tensile load ratio for gears manufactured in Examples 1 and 2 of the invention; and
FIG. 5 is a graph illustrating an actual-use durability life ratio for the gear manufactured in Example 1 of the invention.

### DETAILED DESCRIPTION OF EMBODIMENTS

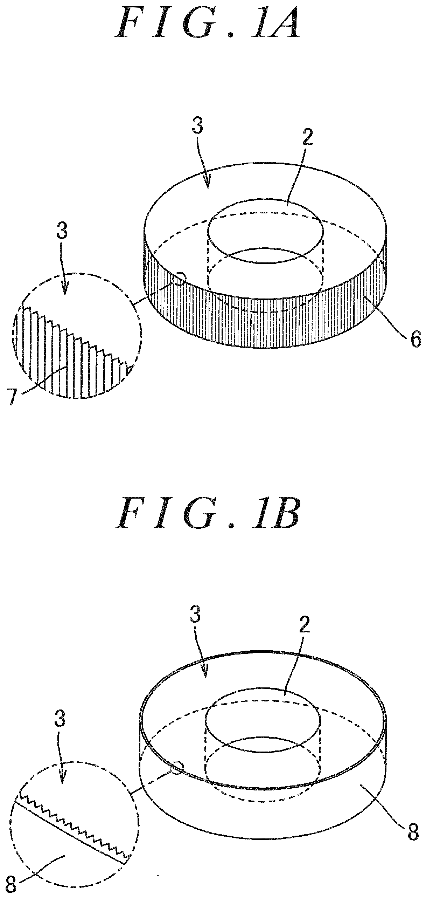

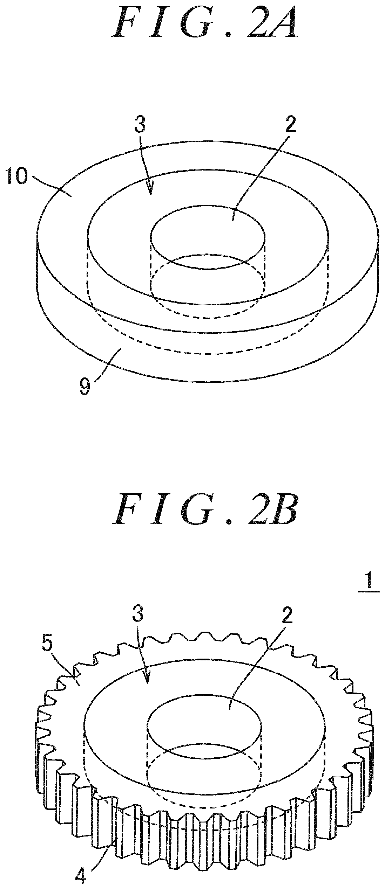

FIG. 1A and FIG. 1B are perspective views illustrating steps of an example of a manufacturing method for a gear in the invention. FIG. 2A is a perspective view illustrating a step continued from the steps in FIG. 1A and FIG. 1B, and FIG. 2B is a perspective view depicting an example of a gear manufactured via the above-mentioned steps. As seen in FIG. 2B, a gear 1 manufactured by the manufacturing method in this example includes an annular sleeve 3 and an annular resin member 5. The sleeve 3 has a through-hole 2 formed in the center of the sleeve 3 and through which a shaft (not depicted in the drawings) is fixedly inserted. The resin member 5 has teeth 4 on an outer peripheral surface integrally provided over an outer periphery of the sleeve 3.

The sleeve 3 is formed of metal such as iron or steel. The resin member 5 is formed of thermoplastic resins such as polyamide (PA6, PA66, PA46, or the like) or aromatic polyamide, polyacetal, PEEK, or PPS. Among these thermoplastic resins, polyamide such as PA66 is preferably used in view of general versatility and the like.

The thermoplastic resin such as polyamide needs to enhance particularly the durability life of the gear. Thus, a thermoplastic resin is preferable which has a high molecular weight and a relative viscosity of 150 Pa·s or more measured using a Cannon-Fenske viscometer in accordance with a formic acid method specified in ISO 307:2007. An upper limit of a melt viscosity is not particularly limited, but in view of injection moldability and the like, the relative viscosity measured under the same conditions is preferably 320 Pa·s or less.

As seen in FIG. 1A, the through-hole 2 in the sleeve 3 is shaped like a cylinder with a constant diameter. An outer peripheral surface 6 of the sleeve 3 is shaped like a cylinder that is concentric with the through-hole 2 and that has a constant diameter. Recesses and protrusions 7 are provided on the outer peripheral surface 6 by involute splining, knurling, or the like. Provision of such recesses and protrusions 7 allows the resin member 5 and the sleeve 3 to be firmly fixed together utilizing clinging of the resin member 5 to the sleeve 3 resulting from shrinkage of the resin member 5 following injection molding. Thus, the resin member 5 can be prevented from slipping out from the sleeve 3 or rotating.

As seen in FIG. 1B, in the manufacturing method in this example, first, a primer layer 8 is formed over the outer peripheral surface 6 of the sleeve 3. The primer layer 8 is formed of a thermoplastic resin-based adhesive that is thermally melted at a temperature lower than a melting point of the thermoplastic resin formed into the resin member 5 as described above to exhibit adhesiveness. Such an adhesive may be, for example, any of various adhesives containing, as a substrate resin, a thermoplastic resin such as copolyamide or polyester, which is combined with a tactifier such as a rosin-based resin or a petroleum resin, wax, an antioxidant, an inorganic filler, or a plasticizer as needed. A general thermofusion temperature (melting point) is set equal to or lower than the melting point of the thermoplastic resin formed into the resin member 5. The adhesive is provided with adhesiveness that is exhibited when thermally melted.

Particularly when the resin member 5 is formed of polyamide such as PA66, the adhesive formed into the primer layer 8 is preferably a polyamide-based adhesive that is similar to the above-described polyamide and excellent in affinity and compatibility and that contains, as a substrate resin, polyamide such as copolyamide. Specific examples of the polyamide-based adhesive include one or more adhesives in a series of VESTAMELT (registered trade mark) adhesives manufactured by Daicel-Evonik Ltd. Among these adhesives, those with product ID numbers corresponding to a melting point equal to or lower than the melting point of polyamide and equal to or higher than a heat resistance temperature needed for the gear 1, specifically 120°C or higher and particularly 130°C or higher.

The primer layer 8 is formed, for example, by attaching powder of the adhesive to the outer peripheral surface 6 of the sleeve 3 by electrostatic spraying and heating the adhesive at the above-described melting point or higher to melt and flow the adhesive on the outer peripheral surface 6.

Then, the sleeve 3 is preheated before insert molding. This preheating may follow heating performed to form the primer layer 8 or may be performed after the sleeve 3 with the primer layer 8 formed thereon is temporarily cooled.

A temperature for the preheating may be optionally set but is preferably equal to or higher than a temperature at which a mold used to form the resin member 5 by injection-molding the thermoplastic resin is heated and also equal to or lower than the melting point of the adhesive. Then, as seen in FIG. 2A, the thermoplastic resin to be formed into the resin member 5 is annularly injection-molded over the outer periphery of the preheated sleeve 3. After a precursor 10 with a cylindrical outer peripheral surface 9 is formed, machining such as hobbing is performed on the outer peripheral surface 9 to form teeth 4. Then, the gear 1 depicted in FIG. 2B is formed.

Such a process allows simplification of the structure of the mold used for injection molding. That is, a surface of the mold that corresponds to the outer peripheral surface 9 of the precursor 10 can be shaped like a simple cylinder conforming to the outer peripheral surface 9. Correspondingly, a complicated die cutting mechanism can be omitted. However, the resin member 5 may be directly formed by injection molding using a mold conforming to the shape of the resin member 5 with the teeth 4 on the outer peripheral surface thereof. In that case, the machining can be omitted.

The above-described process enables manufacturing of the gear 1 in which the adhesive strength between the sleeve 3 and the resin member 5 is enhanced to prevent the resin member 5 from being displaced upward, as described above.

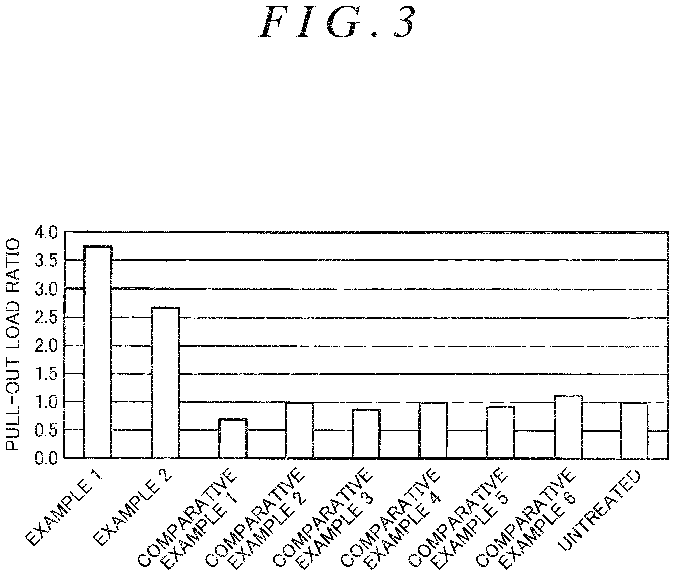

FIG. 3 is a graph illustrating an axial pull-out load ratio for gears manufactured in examples of the invention and in comparative examples. In each of Examples 1, 2 and Comparative Examples 1 to 3 in FIG. 3, the primer layer 8 formed of the material described below was formed over the outer peripheral surface 6 of the sleeve 3 on which the recesses and protrusions 7 were formed.
Example 1: copolyamide-based adhesive, VESTAMELT manufactured by Daicel-Evonik Ltd., melting point: 130° C
Example 2: polyester-based adhesive, melting point: 220°C
Comparative Example 1: polyamideimide (thermoplastic resin), melting point: 300°C
Comparative Example 2: urethane resin (thermosetting resin), curing temperature: 100 to 150°C
Comparative Example 3: epoxy resin (thermosetting resin), curing temperature: 100 to 150°C

In Comparative Examples 4, 5, the outer peripheral surface 6 was treated with the coupling agent described below.

Comparative Example 4: ureido-based silane coupling agent, KBE-585 manufactured by Shin-Etsu Chemical Co., Ltd.

Comparative Example 5: amino-based silane coupling agent, OFS-6020 manufactured by Dow Corning Toray Co., Ltd.

In Comparative Example 6, the outer peripheral surface 6 was further treated by solution etching. With each sleeve 3 preheated at 120°C, PA66 (melting point: 265°C) was injection-molded over the outer periphery of the sleeve 3. The annular precursor 10 depicted in FIG. 2A was formed, and then, the maximum load was measured that was needed to pull out the sleeve 3 in the axial direction with the precursor 10 fixed. The ratio of this maximum load to the maximum load needed when a similar test was conducted with the outer peripheral surface 6 untreated was determined as a pull-out load ratio.

The results are illustrated in FIG. 3. In all of Comparative Example 1 where the primer layer 8 was formed of polyamideimide, which has a higher melting point than PA66, Comparative Examples 2, 3 where the primer layer 8 was formed of a thermosetting resin, Comparative Examples 4, 5 where the outer peripheral surface 6 was treated with the coupling agent, and Comparative Example 6 where the outer peripheral surface 6 was treated by solution etching, only a pull-out load equivalent to or lower than the pull-out load in the untreated case was obtained. This indicates that these examples are not effective for enhancing the adhesive strength between the sleeve 3 and the resin member 5.

Possible reasons are as follows. 1) The primer layer 8 in Comparative Example 1 offered a high heat resistance and failed to exhibit adhesiveness under the heat during injection molding of PA66. 2) The primer layers 8 in Comparative Examples 2, 3 are thermosetting, and was reactively cured by preheating and failed to exhibit adhesiveness. 3) The coupling agents in Comparative Examples 4, 5 were decomposed and inactivated by preheating. In contrast, based on the results of Examples 1, 2, the primer layer 8 is formed of an adhesive that is thermally melted at a temperature lower than the melting point of PA66 to exhibit adhesiveness. This adhesive exhibited appropriate adhesiveness only under the heat applied during injection molding of PA66 without undergoing a curing reaction or being inactivated during preheating. As a result, the adhesive strength between the sleeve 3 and the resin member 5 was determined to be able to be enhanced.

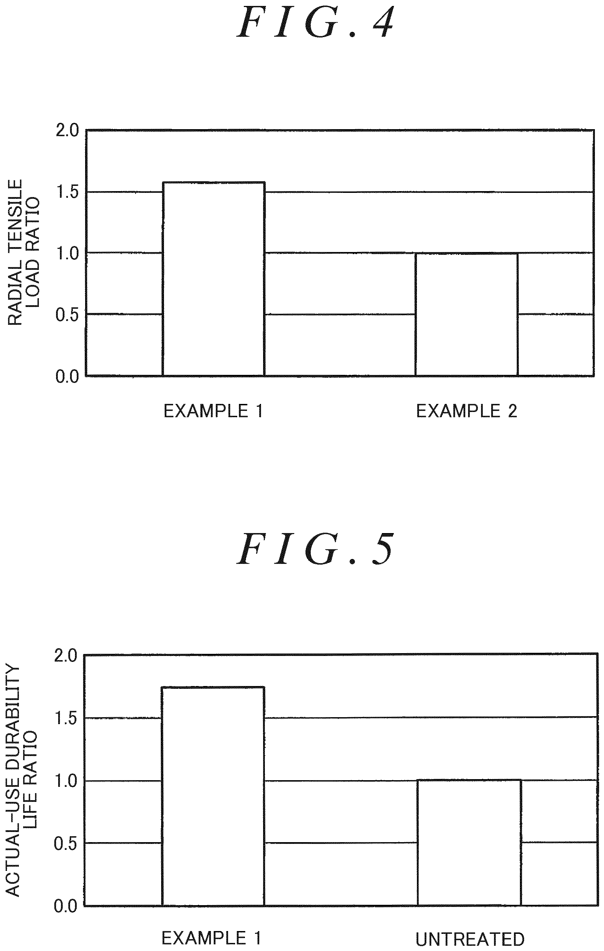

FIG. 4 is a graph illustrating a radial tensile load ratio for the gears manufactured in Examples 1, 2 of the invention. For Examples 1, 2, for which favorable results were obtained in the pull-out load measurement, the same samples were produced again, and an area of the precursor 10 that had a given circumferential width was pulled in the radial direction with the sleeve 3 fixed. The maximum load that was needed to peel off the sleeve 3 from the precursor 10 was measured. The ratio of this maximum load to the maximum load needed when a similar test was conducted with the outer peripheral surface 6 untreated was determined as a radial tensile load ratio.

The results are illustrated in FIG. 4. The results indicate that, for PA66, the primer layer 8 formed of the adhesive containing copolyamide, which is similar to PA66, is more effective for enhancing the adhesive strength between the sleeve 3 and the resin member 5 to suppress upward displacement.

FIG. 5 is a graph illustrating an actual-use durability life ratio for the gear manufactured in Example 1 of the invention. The sample in Example 1 having exhibited a particularly favorable result was produced again. The gear 1 depicted in FIG. 2B was produced by machining the outer peripheral surface 9 of the precursor 10. The gear 1 was assembled into the reduction gear, and an endurance test was conducted in a high temperature environment. The ratio of the result of the endurance test to the result for the durability life of the gear 1 produced with the outer peripheral surface 6 untreated was determined. The result is illustrated in FIG. 5. The result indicate that, when, over the outer peripheral surface 6 of the sleeve 3, the primer layer 8 is formed that is the adhesive thermally melted at a temperature lower than the melting point of PA66 to exhibit adhesiveness, possible breakage or the like resulting from upward displacement of the resin member 5 can be suppressed to enhance the durability life of the gear 1.

## Claims

1. A manufacturing method for a gear (1) including a sleeve (3) and an annular resin member (5) integrally provided over an outer periphery of the sleeve (3), the resin member being a thermoplastic resin and having teeth (4) on an outer peripheral surface of the resin member (5), the manufacturing method comprising:
forming, over an outer peripheral surface of the sleeve, a primer layer (8) that is a thermoplastic resin-based adhesive thermally melted at a temperature lower than a melting point of the thermoplastic resin formed into the resin member to exhibit adhesiveness, then preheating the sleeve (3) before insert molding which is annularly injection-molding, over an outer periphery of the sleeve (3), a thermoplastic resin to be formed into the resin member (5), the adhesive exhibiting adhesiveness only under the heat applied during injection molding without undergoing a curing reaction or being inactivated during preheating, wherein
the temperature for preheating the sleeve (3) is lower than the melting point of the adhesive.

2. The manufacturing method for a gear (1) according to claim 1, wherein the resin member (5) is formed of a thermoplastic resin that has a relative viscosity of 150 Pa·s or more measured using a Cannon-Fenske viscometer in accordance with a formic acid method specified in ISO 307:2007.

3. The manufacturing method for a gear (1) according to claim 1 or 2, wherein the sleeve (3) has recesses and protrusions (7) on the outer peripheral surface (9).

4. The manufacturing method for a gear (1) according to any one of claims 1 to 3, wherein the thermoplastic resin formed into the resin member (5) is polyamide, and the adhesive is a polyamide-based adhesive.

5. The manufacturing method for a gear (1) according to any one of claims 1 to 4, wherein, in the injection molding, a precursor (10) with a cylindrical outer peripheral surface to be formed into the resin member (5) is formed, and then, the outer peripheral surface (9) is machined to form the teeth (4).

6. The manufacturing method for a gear (1) according to any one of claims 1 to 4, wherein, in the injection molding, the resin member (5) having the teeth (4) on an outer peripheral surface (9) of the resin member (5) is formed.

## Patentansprüche

1. Herstellungsverfahren für ein Zahnrad (1) mit einer Hülse (3) und einem ringförmigen Harzelement (5), das über einen Außenumfang der Hülse (3) integral vorgesehen ist, wobei das Harzelement ein thermoplastisches Harz ist und auf einer Außenumfangsfläche des Harzelements (5) Zähne (4) aufweist, wobei das Herstellungsverfahren die folgenden Schritte umfasst:
Ausbilden einer Primerschicht (8) über einer Außenumfangsfläche der Hülse, die ein Klebstoff auf thermoplastischer Harzbasis ist, der thermisch bei einer Temperatur geschmolzen wird, die niedriger als ein Schmelzpunkt des thermoplastischen Harzes ist, das zu dem Harzelement gebildet wird, um eine Klebrigkeit aufzuweisen, und dann Vorwärmen der Hülse (3) vor einem Einsatzformen, bei dem ein thermoplastisches Harz über einem Außenumfang der Hülse (3) ringförmig spritzgegossen wird, das zu dem Harzelement (5) gebildet werden soll, wobei der Klebstoff nur unter der Wärme, die während des Spritzgießens aufgebracht wird, die Klebrigkeit aufweist, ohne eine Härtungsreaktion einzugehen oder während des Vorwärmens inaktiviert zu werden, wobei
die Temperatur zum Vorwärmen der Hülse (3) niedriger ist als der Schmelzpunkt des Klebstoffs.

2. Herstellungsverfahren für ein Zahnrad (1) nach Anspruch 1, wobei das Harzelement (5) aus einem thermoplastischen Harz gebildet ist, das eine relative Viskosität von 150 Pa·s oder mehr aufweist, die unter Verwendung eines Cannon-Fenske-Viskosimeters gemäß einem in ISO 307:2007 spezifizierten Ameisensäureverfahren gemessen wird.

3. Herstellungsverfahren für ein Zahnrad (1) nach Anspruch 1 oder 2, wobei die Hülse (3) an der Außenumfangsfläche (9) Aussparungen und Vorsprünge (7) aufweist.

4. Herstellungsverfahren für ein Zahnrad (1) nach einem der Ansprüche 1 bis 3, wobei das zum Harzelement (5) gebildete thermoplastische Harz Polyamid ist und der Klebstoff ein Klebstoff auf Polyamidbasis ist.

5. Herstellungsverfahren für ein Zahnrad (1) nach einem der Ansprüche 1 bis 4, wobei beim Spritzgießen ein Vorprodukt (10) mit einer zylindrischen Außenumfangsfläche, das zum Harzelement (5) gebildet werden soll, gebildet wird und dann die Außenumfangsfläche (9) zum Ausbilden der Zähne (4) bearbeitet wird.

6. Herstellungsverfahren für ein Zahnrad (1) nach einem der Ansprüche 1 bis 4, wobei beim Spritzgießen das Harzelement (5) mit den Zähnen (4) auf einer Außenumfangsfläche (9) des Harzelements (5) ausgebildet wird.

## Revendications

1. Procédé de fabrication pour un engrenage (1) incluant un manchon (3) et un élément de résine annulaire (5) fourni de manière intégrale sur une périphérie externe du manchon (3), l'élément de résine étant une résine thermoplastique et présentant des dents (4) sur une surface périphérique externe de l'élément de résine (5), le procédé de fabrication comprenant :
la formation, sur une surface périphérique externe du manchon, d'une couche d'apprêt (8) qui est un adhésif à base de résine thermoplastique thermiquement fondu à une température inférieure à un point de fusion de la résine thermoplastique façonnée en l'élément de résine pour exhiber un caractère adhésif, puis le préchauffage du manchon (3) avant un moulage par insertion qui est un moulage par injection annulaire, sur une périphérie externe du manchon (3), d'une résine thermoplastique à façonner en l'élément de résine (5), l'adhésif présentant un caractère adhésif uniquement sous la chaleur appliquée pendant le moulage par injection sans être soumis à une réaction de durcissement ou étant inactivé pendant le préchauffage, dans lequel
la température pour le préchauffage du manchon (3) est inférieure au point de fusion de l'adhésif.

2. Procédé de fabrication pour un engrenage (1) selon la revendication 1, dans lequel l'élément de résine (5) est formé d'une résine thermoplastique qui présente une viscosité relative de 150 Pa.s ou supérieure mesurée en utilisant un viscosimètre Cannon-Fenske selon une méthode à l'acide formique spécifiée dans ISO 307:2007.

3. Procédé de fabrication pour un engrenage (1) selon la revendication 1 ou 2, dans lequel le manchon (3) présente des creux et des protubérances (7) sur la surface périphérique externe (9).

4. Procédé de fabrication pour un engrenage (1) selon l'une quelconque des revendications 1 à 3, dans lequel la résine thermoplastique façonnée en l'élément de résine (5) est du polyamide, et l'adhésif est un adhésif à base de polyamide.

5. Procédé de fabrication pour un engrenage (1) selon l'une quelconque des revendications 1 à 4, dans lequel, dans le moulage par injection, un précurseur (10) avec une surface périphérique externe cylindrique à façonner en l'élément de résine (5) est formé, et puis, la surface périphérique externe (9) est usinée pour former les dents (4).

6. Procédé de fabrication pour un engrenage (1) selon l'une quelconque des revendications 1 à 4, dans lequel, dans le moulage par injection, l'élément de résine (5) présentant les dents (4) sur une surface périphérique externe (9) de l'élément de résine (5) est formé.
